(19) Europäisches Patentamt
European Patent Office
Office européen des brevets

(11) **EP 3 941 042 B1**

(12) **EUROPEAN PATENT SPECIFICATION**

(45) Date of publication and mention
of the grant of the patent:
**13.11.2024  Bulletin 2024/46**

(21) Application number: **20824074.7**

(22) Date of filing: **27.05.2020**

(51) International Patent Classification (IPC):
*H04N 23/11* (2023.01)    *H04N 13/254* (2018.01)
*H04N 13/271* (2018.01)    *H04N 13/128* (2018.01)
*H04N 13/00* (2018.01)

(52) Cooperative Patent Classification (CPC):
**H04N 13/254; H04N 13/128; H04N 13/271;
H04N 23/11; H04N 23/20;** H04N 23/45;
H04N 25/131; H04N 25/134; H04N 25/135;
H04N 2013/0081

(86) International application number:
**PCT/CN2020/092507**

(87) International publication number:
**WO 2021/237493 (02.12.2021 Gazette 2021/48)**

(54) **IMAGE PROCESSING METHOD, CAMERA ASSEMBLY AND STORAGE MEDIUM**

BILDVERARBEITUNGSVERFAHREN, KAMERAKOMPONENTE UND SPEICHERMEDIUM

PROCÉDÉ DE TRAITEMENT D'IMAGE, ENSEMBLE CAMÉRA ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.01.2022  Bulletin 2022/03**

(73) Proprietors:
• **Beijing Xiaomi Mobile Software Co., Ltd.
Nanjing Branch
Jianye District
Nanjing
Jiangsu 210019 (CN)**
• **Beijing Xiaomi Mobile Software Co., Ltd.
Beijing 100085 (CN)**

(72) Inventors:
• **XU, Jing
Beijing 100085 (CN)**
• **LIU, Lin
Beijing 100085 (CN)**
• **ZHU, Dan
Beijing 100085 (CN)**

(74) Representative: **Dehns Germany Partnerschaft
mbB
Theresienstraße 6-8
80333 München (DE)**

(56) References cited:
CN-A- 106 534 633    CN-A- 107 172 407
CN-A- 107 395 974    CN-A- 108 234 984
US-A1- 2010 328 475    US-A1- 2012 327 195
US-A1- 2015 009 295    US-A1- 2017 264 884
US-A1- 2019 228 512

## Description

### TECHNICAL FIELD

The present disclosure relates to the technical field of image processing, and more particularly, to an image processing method and device, a camera component, an electronic device, and a storage medium.

### BACKGROUND

A conventional camera may be configured to record a video or take a picture, collect brightness information and color information of a scenario, but cannot collect depth information. Along with increase of application requirements, depth cameras have been added to cameras of some electronic devices to form camera arrays. The depth camera may include an array camera module, a structured light module and a time of flight (TOF) module, and depth information may be obtained according to a working principle of each module. However, the camera array requires independent arrangement of the depth camera, which results in occupation of valuable space on the electronic device and is unfavorable for miniaturization and cost reduction of the electronic device. Related technologies are known from US 2017/264884 A1, US 2010/328475 A1 and US 2019/228512 A1. US 2017/264884 A1 discloses an apparatus that has a processing device coupled to a projection device and cameras to receive images. The processing device obtains first and second depth information from the images and generates a depth map of a scene from the depth information selectively. The processing device comprises a first depth information unit comparing a visible light image of the first image with a visible light image of the second image to obtain the first depth information. A second depth information unit identifies an invisible light image in the second image to obtain the second depth information.

US 2010/328475 A1 discloses a method that involves capturing two images illuminated by natural light and infrared light respectively.

US 2019/228512 A1 discloses an image processing device that includes an invisible image filter separator that separates an invisible detail component, a visible image filter separator that separates a visible base component and a visible detail component, a base luminance color separator that separates a visible luminance base component and a visible color base component, a detail luminance color separator that separates a visible luminance detail component, a detail synthesizer that generates a synthetic luminance detail component, a synthetic luminance component generator that generates a synthetic luminance component, and a luminance color synthesizer that generates a synthetic image.

## SUMMARY

In view of this, the present disclosure provides an image processing method and device, a camera component, an electronic device, and a storage medium.

According to a first aspect of the present disclosure, a camera component is provided as defined by claim 1.

According to a second aspect of the present disclosure, an image processing method is provided as defined by claim 7,

According to another aspect of the present disclosure, a readable storage medium is provided, in which an executable computer program is stored, the computer program is executed to implement the steps of any abovementioned method.

The invention is defined by the independent claims. The dependent claims define advantageous embodiments.

## BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

FIG. 1 is a block diagram of a camera component, according to an exemplary embodiment.
FIG. 2 is a diagram of an application scenario, according to an exemplary embodiment.
FIG. 3 is a schematic diagram illustrating acquisition of a visible light depth image, according to an exemplary embodiment.
FIG. 4 is a flow chart showing an image processing method, according to an exemplary embodiment.
FIG. 5 is a block diagram of an image processing device, according to an exemplary embodiment.
FIG. 6 is a block diagram of an electronic device, according to an exemplary embodiment.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The embodiments set forth in the following exemplary description do not represent all embodiments consistent with the present disclosure. Instead, they are merely examples of apparatuses consistent with aspects related to the present disclosure as recited in the appended claims.

A conventional camera may be configured to record a video or take a picture, collect brightness information and color information of a scenario, but cannot collect depth information. Along with increase of application requirements, depth cameras have been added to cameras of some electronic devices to form camera arrays. The depth camera may include an array camera module, a structured light module and a TOF module, and depth information may be obtained according to a working principle of each module. However, the camera array requires independent arrangement of the depth camera, which results in occupation of a valuable space of the electronic device and is unfavorable for miniaturization and cost reduction of the electronic device.

To solve the above technical problem, embodiments of the present disclosure provide an image processing method and device, a camera component, an electronic device, and a storage medium. The inventive concept is that: a first camera module configured to sense first-band light and acquire a first image and a second camera module configured to sense the first-band light and second-band light and acquire a second image are arranged in a camera module array, and a processor may perform image processing, for example, acquisition of a depth image, on at least one of a bayer subimage or an infrared subimage in the second image and the first image.

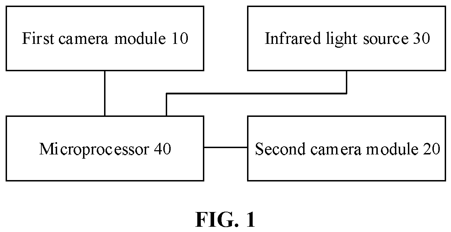

FIG. 1 is a block diagram of a camera component, according to an exemplary embodiment. Referring to FIG. 1, the camera component may include a first camera module 10, a second camera module 20, an infrared light source 30 and a processor 40. The first camera module 10 may sense first-band light, and the second camera module 20 may sense the first-band light and second-band light. The processor 40 is coupled with the first camera module 10, the second camera module 20 and the infrared light source 30 respectively. The term being coupled with refers to that the processor 40 may send a control instruction and acquire images from the camera modules 10, 20, and may specifically be implemented through a communication bus, a cache or a wireless manner. No limits are made herein.

The first camera module 10 is configured to generate a first image under the control of the processor 40. The first image may be a red green blue (RGB) image.

The infrared light source 30 is configured to emit the second-band light under the control of the processor 40.

The second camera module 20 is configured to generate a second image under the control of the processor 40. The second image may include a bayer subimage generated by sensing the first-band light and an infrared subimage generated by sensing the second-band light.

The processor 40 is configured to acquire the bayer subimage and the infrared subimage according to the second image, and perform image processing on at least one of the bayer subimage or the infrared subimage and the first image.

Exemplarily, in the embodiments, the first-band light may be light of a visible light band, and the second-band light may be light of an infrared band.

In the embodiments, the first camera module 10 may include an image sensor, a camera lens, an infrared filter and other elements responding to the first-band light (for example, the visible light band), and may further include a voice coil motor, a circuit substrate and other elements. The image sensor may respond to the first-band light by use of a charge-coupled device (CCD), a complementary metal oxide semiconductor (CMOS), or the like. For facilitating cooperative use of the first camera module 10 and the second camera module 20, a filter in the image sensor of the first camera module 10 may be a color filter array only responding to the visible light band such as a bayer template, a cyan yellow yellow magenta (CYYM) template, a cyan yellow green magenta (CYGM) template, and the like. A mounting position and working principle of each element of the first camera module 10 may refer to a related art and will not be repeated herein.

In the embodiments, the second camera module 20 may include an image sensor, a camera lens, a visible light-near infrared bandpass filter and other elements responding to both the first-band light (for example, light of the visible light band) and the second-band light (for example, light of the infrared band), and may further include a voice coil motor, a circuit substrate and other elements. The image sensor responding to both the first-band light and the second-band light may be implemented by use of the CCD, the CMOS, or the like, and a filter thereof may be a color filter array responding to both the visible light band and the infrared band such as an RGB infrared (RGBIR) template, an RGB white (RGBW) template, and the like. A mounting position and working principle of each element of the second camera module 20 may refer to the related art and will not be repeated herein.

In the embodiments, the infrared light source 30 may include at least one of an infrared flood light source, a structured light source or a TOF light source. A working principle of the infrared flood light source is to increase infrared illuminating brightness to an object in a framing range. A working principle of the structured light source is to project specific light information to a surface of the object and a background and calculate information of a position, depth and the like of the object according to a change of a light signal caused by the object. A working principle of the TOF light source is to project an infrared pulse into the framing range and calculate a distance of the object according to round-trip time of the infrared pulse.

In the embodiments, the processor 40 may be implemented by an independently arranged microprocessor, and may also be implemented by a processor of an electronic device with the camera component. The processor 40 has functions of the following two aspects.

In a first aspect, an operation signal of one or combination of a button, a microphone (MIC) and the image sensor may be received to control the first camera module 10, the second camera module 20 and the infrared light source 30. For example, when the electronic device is in a normal photographic mode, the processor 40 may adjust a parameter of the first camera module 10, such as a focal length, brightness, and the like. When detecting a shutter pressing action of a user, the processor 40 may control the first camera module 10 to take a picture. When the electronic device is in a panorama, high-dynamic range (HDR), entire focus or other mode or in a low-light scenario, the processor 40 may turn on/activate the infrared light source 30, simultaneously adjust parameters of the first camera module 10 and the second camera module 20, such as focal lengths, brightness and the like. When detecting the shutter pressing action of the user, the processor 40 may control the first camera module 10 to take a picture to obtain the first image and control the second camera module 20 to take a picture to obtain the second image.

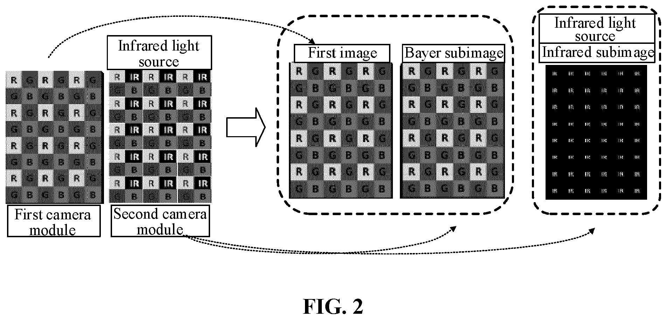

In a second aspect, when a depth image is required, as illustrated in FIG. 2, the electronic device may process the first image and the second image to acquire a visible light depth image or a depth fused image.

In an example, the processor may extract the bayer subimage corresponding to the first-band light from the second image, and calculate the visible light depth image according to the first image and the bayer subimage. The calculating process is as follows.

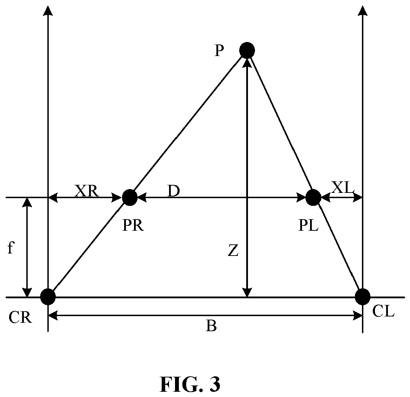

Referring to FIG. 3, P is a certain point of an object to be detected (i.e., a shooting target) in a framing range, CR and CL are optical centers of a first camera and a second camera respectively, imaging points of the point P on light sensors of the two cameras are PR and PL respectively (image planes of the cameras are positioned in front of the camera lenses after rotation), f is a focal length of the camera, B is a center distance of the two cameras, and Z is a depth to be detected. If a distance between the point PR and the point PL is set to be D:

$$D=B-(XR-XL).$$

According to a principle of similar triangles:

$$[B-(XR-XL)]/B=(Z-F)/Z,$$

it may be obtained that:

$$Z=fB/(XR-XL).$$

The focal length f, the center distance B of the cameras, a coordinate XR of the point P on the right image plane and a coordinate XL of the point P on the left image plane may be obtained by calibration, therefore it is necessary to obtain (XR-XL) to obtain the depth, where f, B, XR and XL may be determined by calibration, correction and matching operations. The calibration, correction and matching operations may refer to the related art and will not be repeated herein.

The processor 40 may repeat the abovementioned steps to obtain depths of all pixels in the first image to obtain the visible light depth image. The visible light depth image may be configured for service scenarios including a large aperture, face/iris unlocking, face/iris payment, three-dimensional (3D) retouching, studio lighting, Animoji, and the like.

In an example, fields of view of each camera in the first camera module 10 and the second camera module 20 may be different, and a magnitude relationship of them is not limited. In such case, the processor 40 may crop images in corresponding sizes from the first image and the second image in combination with the fields of view of the two cameras. For example, a frame of image in a relatively large size is cropped from the bayer subimage extracted from the second image, and then a frame of image in a relatively small size is cropped from the first image, that is, the image cropped from the bayer subimage of the second image is larger than the image cropped from the first image. Then, the images are sequentially displayed. Therefore, a zooming effect may be achieved, that is, a shooting effect like optical zooming may be achieved in the embodiments, which is favorable for improving a shooting experience.

In another example, considering that the second image further includes infrared information, the processor 40 extracts the infrared subimage generated by sensing the second-band light from the second image. Since high-frequency information in a frequency domain of the infrared subimage is richer than information in a frequency domain of the first image, the infrared subimage and the first image are fused, the high-frequency information of the infrared subimage is extracted and added to the frequency domain of the first image, to achieve an effect of enhancing the first image and ensure that the fused first image has richer details and is higher in resolution and more accurate in color. In addition, the infrared subimage may further be configured for a biometric recognition function of the electronic device, for example, fingerprint unlocking, face recognition and other scenarios.

In another example, considering that the infrared light source may be the structured light source, still referring to FIG. 2, under the condition that the infrared light source includes the structured light source, the processor 40 may further acquire infrared depth data based on the infrared subimage. For example, the processor 40 may control the infrared light source 30 to project a light beam of a specific direction to a shooting target such as an object or a background, and acquire a parameter of an echo signal of the light beam, such as strength, a spot size or the like. The processor 40 may obtain infrared depth data from the shooting target to the camera based on a preset corresponding relationship between a parameter and a distance, and the infrared depth data is relative to the visible light depth image and may include texture information of the shooting target such as the object or the background. In such case, the processor 40 may select to use the visible light depth image or the infrared depth data according to a specific scenario. For example, the visible light depth image may be used in a high-light scenario (that is, an ambient brightness value is greater than a preset brightness value, like a daytime scenario), in a scenario that the shooting target is semitransparent or in a scenario that the shooting target absorbs infrared light. For example, the infrared depth data may be used in a low-light scenario (that is, the ambient brightness value is smaller than the preset brightness value, like a night scenario), in a scenario that the shooting target is a texture-less object or in a scenario that the shooting target is an object that periodically appears. The visible light depth image or the infrared depth data may also be fused to obtain the depth fused image. The depth fused image may compensate various defects of the visible light depth image and the infrared depth data, may be applied to almost all scenarios, particularly to scenarios of a poor illumination condition, the texture-less object, the periodically appearing object or the like, and is favorable for improving the confidence of the depth data.

In another example, considering that the infrared light source may be the TOF light source, still referring to FIG. 2, under the condition that the infrared light source includes the TOF light source, the processor 40 may further acquire the infrared depth data based on the infrared subimage, and the infrared depth data is relative to the visible light depth image and may include the texture information of the shooting target such as the object or the background. For example, the processor 40 may control the TOF light source to project a light beam of a specific direction to the object or the background, acquire a time difference between emission time and return time of an echo signal of the light beam, and calculate the infrared depth data from the object to the camera. In such case, the processor 40 may select to use the visible light depth image or the infrared depth data according to a specific scenario. For example, the visible light depth image may be used in a high-light scenario (that is, an ambient brightness value is greater than a preset brightness value, like a daytime scenario), in a scenario that the shooting target is semitransparent or in a scenario that the shooting target absorbs infrared light. For example, the infrared depth data may be used in a low-light scenario (that is, the ambient brightness value is smaller than the preset brightness value, like a night scenario), in a scenario that the shooting target is a texture-less object or in a scenario that the shooting target is an object that periodically appears. The visible light depth image or the infrared depth data may also be fused to obtain the depth fused image. The depth fused image may compensate defects of the visible light depth image and the infrared depth data, may be applied to almost all scenarios, particularly to scenarios that an illumination condition is poor, the shooting target is the texture-less object, the periodically appearing object or the like, and is favorable for improving the confidence of the depth data.

It is to be noted that, in the embodiments, the structured light source or the TOF light source is selected, and improvement or addition of camera modules is not involved, such that difficulties in design may be greatly reduced.

Herein, in the embodiments of the present disclosure, the first camera module in the camera component may collect the first image, the second camera module acquires the second image, the bayer subimage and the infrared subimage may be acquired from the second image, and then image processing, for example, acquisition of the depth image, may be performed on at least one of the bayer subimage or the infrared subimage and the first image, that is, the depth image may be acquired without arranging any depth camera in a camera module array, such that the size of the camera component may be reduced, a space occupied by it in the electronic device may be reduced, and miniaturization and cost reduction of the electronic device are facilitated.

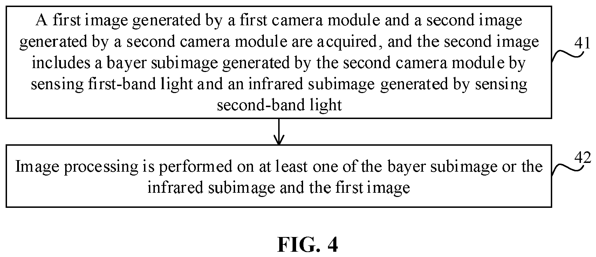

The embodiments of the present disclosure also provide an image processing method. FIG. 4 is a flow chart showing an image processing method, according to an exemplary embodiment. Referring to FIG. 4, the image processing method is applied to the camera component provided in the abovementioned embodiments and may include the following steps.

In step 41, a first image generated by a first camera module and a second image generated by a second camera module are acquired, and the second image includes a bayer subimage generated by the second camera module by sensing first-band light and an infrared subimage generated by sensing second-band light.

In step 42, image processing is performed on at least one of the bayer subimage or the infrared subimage and the first image.

In an embodiment, the operation in step 42 that the image processing is performed on at least one of the bayer subimage or the infrared subimage and the first image may include: fusing the infrared subimage and the first image to enhance the first image.

In an embodiment, the operation in step 42 that the image processing is performed on at least one of the bayer subimage or the infrared subimage and the first image may include: acquiring a visible light depth image according to the bayer subimage and the first image.

In an embodiment, when an infrared light source includes a structured light source or a TOF light source, the operation in step 42 that the image processing is performed on at least one of the bayer subimage or the infrared subimage and the first image may include: fusing the visible light depth image and depth data of the infrared subimage to obtain a depth fused image.

In an embodiment, the method may further include: responsive to a zooming operation of a user, performing image zooming based on the first image and the bayer subimage.

It can be understood that the method provided in each embodiment of the present disclosure is matched with a working process of the camera component and specific contents may refer to the contents of each embodiment of the camera component and will not be repeated herein.

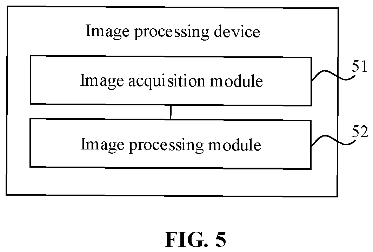

The embodiments of the present disclosure also provide an image processing device, referring to FIG. 5, which may include: an image acquisition module 51 and an image processing module 52.

The image acquisition module 51 is configured to acquire a first image generated by a first camera module and a second image generated by a second camera module, and the second image includes a bayer subimage generated by the second camera module by sensing first-band light and an infrared subimage generated by sensing second-band light.

The image processing module 52 is configured to perform image processing on at least one of the bayer subimage or the infrared subimage and the first image.

In an embodiment, the image processing module 52 may include: an image enhancement unit, configured to fuse the infrared subimage and the first image to enhance the first image.

In an embodiment, the image processing module 52 may include: a depth image acquisition unit, configured to acquire a visible light depth image according to the bayer subimage and the first image.

In an embodiment, when an infrared light source includes a structured light source or a TOF light source, the image processing module includes: a depth fusion unit, configured to fuse the visible light depth image and depth data of the infrared subimage to obtain a depth fused image.

In an embodiment, the device may further include: a zooming module, configured to, responsive to a zooming operation of a user, perform image zooming based on the first image and the bayer subimage.

It can be understood that the device provided in each embodiment of the present disclosure corresponds to the method embodiments and specific contents may refer to the contents of each method embodiment and will not be repeated herein.

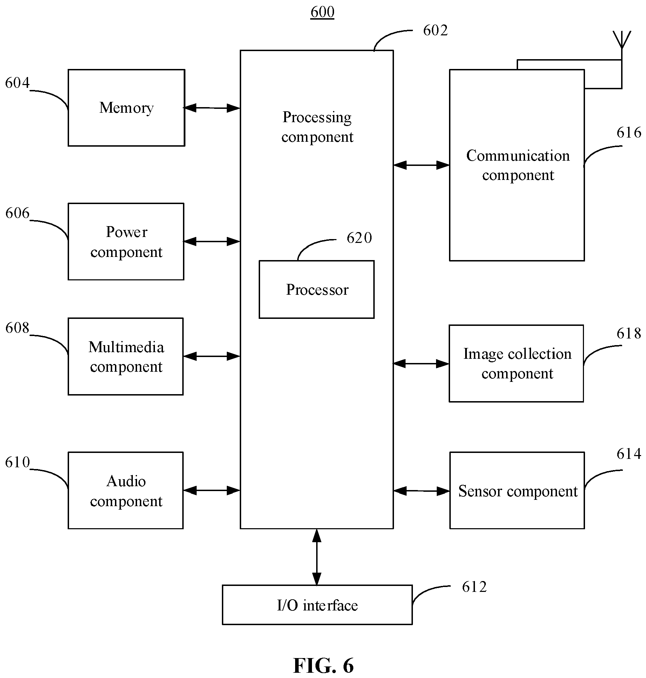

FIG. 6 is a block diagram of an electronic device, according to an exemplary embodiment. For example, the electronic device 600 may be a smart phone, a computer, a digital broadcast terminal, a tablet, a medical device, exercise equipment, a personal digital assistant, and the like.

Referring to FIG. 6, the electronic device 600 may include one or more of the following components: a processing component 602, a memory 604, a power component 606, a multimedia component 608, an audio component 610, an input/output (I/O) interface 612, a sensor component 614, a communication component 616 and an image collection component 618.

The processing component 602 typically controls overall operations of the electronic device 600, such as the operations associated with display, telephone calls, data communications, camera operations, and recording operations. The processing component 602 may include one or more processors 620 to execute computer programs. Moreover, the processing component 602 may include one or more modules which facilitate interaction between the processing component 602 and other components. For instance, the processing component 602 may include a multimedia module to facilitate interaction between the multimedia component 608 and the processing component 602.

The memory 604 is configured to store various types of data to support the operation of the electronic device 600. Examples of such data include computer programs for any applications or methods operated on the electronic device 600, contact data, phonebook data, messages, pictures, video, etc. The memory 604 may be implemented by any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, and a magnetic or optical disk.

The power component 606 provides power for various components of the electronic device 600. The power component 606 may include a power management system, one or more power supplies, and other components associated with generation, management and distribution of power for the electronic device 600. The power component 606 may include a power chip, and a controller may communicate with the power chip, thereby controlling the power chip to turn on or turn off a switching device to cause or disable a battery to supply power to a mainboard circuit.

The multimedia component 608 includes a screen providing an output interface between the electronic device 600 and a target object. In some embodiments, the screen may include a liquid crystal display (LCD) and a touch panel (TP). If the screen includes the TP, the screen may be implemented as a touch screen to receive an input signal from the target object. The TP includes one or more touch sensors to sense touches, swipes and gestures on the TP. The touch sensors may not only sense a boundary of a touch or swipe action, but also detect a period of time and a pressure associated with the touch or swipe action.

The audio component 610 is configured to output and/or input an audio signal. For example, the audio component 610 includes a MIC, and the MIC is configured to receive an external audio signal when the electronic device 600 is in an operation mode, such as a call mode, a recording mode and a voice recognition mode. The received audio signal may further be stored in the memory 604 or sent through the communication component 616. In some embodiments, the audio component 610 further includes a speaker configured to output the audio signal.

The I/O interface 612 provides an interface between the processing component 602 and peripheral interface modules, such as a keyboard, a click wheel, buttons, and the like.

The sensor component 614 includes one or more sensors configured to provide status assessments in various aspects for the electronic device 600. For instance, the sensor component 614 may detect an on/off status of the electronic device 600 and relative positioning of components, such as a display screen and small keyboard of the electronic device 600, and the sensor component 614 may further detect a change in a position of the electronic device 600 or a component, presence or absence of contact between the target object and the electronic device 600, orientation or acceleration/deceleration of the electronic device 600 and a change in temperature of the electronic device 600.

The communication component 616 is configured to facilitate wired or wireless communication between the electronic device 600 and other devices. The electronic device 600 may access a communication-standard-based wireless network, such as a wireless fidelity (WiFi) network, a 2nd-generation (2G) or 3rd-generation (3G) network or a combination thereof. In an exemplary embodiment, the communication component 616 receives a broadcast signal or broadcast associated information from an external broadcast management system through a broadcast channel. In an exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wide band (UWB) technology, a Bluetooth (BT) technology, and other technologies.

The image collection component 618 is configured to collect images. For example, the image collection component 618 may be implemented by the camera component provided in the abovementioned embodiments.

In an exemplary embodiment, the electronic device 600 may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components.

In an exemplary embodiment, there is also provided a non-transitory readable storage medium including an executable computer program, such as the memory 604 including instructions, and the executable computer program may be executed by the processor. The readable storage medium may be a ROM, a random access memory (RAM), a compact disc read-only memory (CD-ROM), a magnetic tape, a floppy disc, an optical data storage device, and the like.

Other implementation solutions of the present disclosure will be apparent to those skilled in the art from consideration of the specification and practice of the present disclosure. This present disclosure is intended to cover any variations, uses, or adaptations following the general principles thereof and including such departures from the present disclosure as come within known or customary practice in the art. It is intended that the specification and examples be considered as exemplary only, with the scope of the invention being defined by the following claims.

It will be appreciated that the present disclosure is not limited to the exact construction that has been described above and illustrated in the accompanying drawings, and that various modifications and changes may be made without departing from the scope thereof. It is intended that the scope of the invention only be limited by the appended claims.

**Claims**

1. A camera component, wherein the camera component comprises a first camera module (10) sensing first-band light, a second camera module (20) sensing the first-band light and second-band light, an infrared light source (30) emitting the second-band light, and a processor (40); wherein the processor (40) is coupled with the first camera module (10), the second camera module (20) and the infrared light source (30) respectively;

   the first camera module (10) is configured to generate a first image under control of the processor (40);
   the infrared light source (30) is configured to emit the second-band light under the control of the processor (40);
   the second camera module (20) is configured to generate a second image under the control of the processor (40), the second image comprising a bayer subimage generated by sensing the first-band light and an infrared subimage generated by sensing the second-band light; and
   the processor (40) is further configured to perform image processing on at least one of the bayer subimage or the infrared subimage and the first image;
   **characterized in that**
   the processor is configured to perform the image processing on the infrared subimage and the first image by fusing the infrared subimage and the first image to enhance the first image, wherein the processor is configured, therefor, to extract high-frequency information of the infrared subimage and add the extracted high-frequency information into a frequency domain of the first image.

2. The camera component of claim 1, wherein the infrared light source (30) comprises at least one of: an infrared flood light source, a structured light source or a time of flight (TOF) light source; wherein the infrared flood light source is configured to increase infrared illuminating brightness to an object in a framing range.

3. The camera component of claim 1, wherein fields of view of camera lenses in the first camera module (10) and the second camera module (20) are different.

4. The camera component of claim 1, wherein the processor (40) is further configured to acquire a visible light depth image according to the bayer subimage and the first image.

5. The camera component of claim 1, wherein, when an infrared light source comprises a structured light source or a time of flight (TOF) light source, the processor (40) is further configured to fuse a visible light depth image and depth data of the infrared subimage to obtain a depth fused image.

6. The camera component of claim 1, wherein the processor (40) is further configured, in response to a zooming operation of a user, to: perform image zooming based on the first image and the bayer subimage.

7. An image processing method, wherein the method comprises:

acquiring (41) a first image generated by a first camera module and a second image generated by a second camera module, the first camera module sensing first-band light, the second camera module sensing the first-band light and second-band light, the second image comprising a bayer subimage generated by the second camera module by sensing the first-band light and an infrared subimage generated by sensing the second-band light; and performing (42) image processing on at least one of the bayer subimage or the infrared subimage and the first image;
**characterized in that**
performing the image processing on the infrared subimage and the first image comprises fusing the infrared subimage and the first image to enhance the first image, wherein fusing comprises extracting high-frequency information of the infrared subimage and adding the extracted high-frequency information into a frequency domain of the first image.

8. The image processing method of claim 7, wherein performing the image processing on at least one of the bayer subimage or the infrared subimage and the first image comprises:
acquiring a visible light depth image according to the bayer subimage and the first image.

9. The image processing method of claim 8, wherein, when an infrared light source comprises a structured light source or a time of flight (TOF) light source, performing the image processing on at least one of the bayer subimage or the infrared subimage and the first image comprises:
fusing a visible light depth image and depth data of the infrared subimage to obtain a depth fused image.

10. The image processing method of claim 7, further comprising:
performing, in response to a zooming operation of a user, image zooming based on the first image and the bayer subimage.

11. A computer-readable storage medium comprising instructions to cause the camera component of claim 1 to execute the steps of the method of any one of the claims 7 to 10.

**Patentansprüche**

1. Kamerakomponente, wobei

die Kamerakomponente ein erstes Kameramodul (10), das Licht erster Bande erfasst, ein zweites Kameramodul (20), das Licht erster Bande und Licht zweiter Bande erfasst, eine Infrarotlichtquelle (30), die Licht zweiter Bande emittiert, und einen Prozessor (40) umfasst; wobei der Prozessor (40) mit dem ersten Kameramodul (10), dem zweiten Kameramodul (20) bzw. der Infrarotlichtquelle (30) gekoppelt ist;
das erste Kameramodul (10) dazu konfiguriert ist, ein erstes Bild unter der Steuerung des Prozessors (40) zu erzeugen;
die Infrarotlichtquelle (30) dazu konfiguriert ist, das Licht zweiter Bande unter der Steuerung des Prozessors (40) zu emittieren;
das zweite Kameramodul (20) dazu konfiguriert ist, unter der Steuerung des Prozessors (40) ein zweites Bild zu erzeugen, wobei das zweite Bild ein durch Erfassen des Lichts erster Bande erzeugtes Bayer-Teilbild und ein durch Erfassen des Lichts zweiter Bande erzeugtes Infrarot-Teilbild umfasst; und
der Prozessor (40) ferner dazu konfiguriert ist, eine Bildverarbeitung an zumindest entweder dem Bayer-Teilbild oder dem Infrarot-Teilbild oder dem ersten Bild durchzuführen;

**dadurch gekennzeichnet, dass**

der Prozessor dazu konfiguriert ist, die Bildverarbeitung an dem Infrarot-Teilbild und dem ersten Bild durch Fusionieren des Infrarotbildes und des ersten Bildes durchzuführen, um das erste Bild zu verbessern, wobei der Prozessor dazu konfiguriert ist, Hochfrequenzinformationen des Infrarot-Teilbildes zu extrahieren und die extrahierten Hochfrequenzinformationen in eine Frequenzdomäne des ersten Bildes hinzuzufügen.

2. Kamerakomponente nach Anspruch 1, wobei die Infrarotlichtquelle (30) zumindest eines der folgenden Merkmale aufweist: eine Infrarot-Flutlichtquelle, eine strukturierte Lichtquelle oder eine Lichtquelle mit Laufzeitmessung (TOF); wobei die Infrarot-Flutlichtquelle dazu konfiguriert ist, die Infrarot-Beleuchtungshelligkeit für ein Objekt in einem Aufnahmebereich zu erhöhen.

3. Kamerakomponente nach Anspruch 1, wobei Sichtfelder von Kameralinsen in dem ersten Kameramodul (10) und dem zweiten Kameramodul (20) unterschiedlich sind.

4. Kamerakomponente nach Anspruch 1, wobei der Prozessor (40) ferner dazu konfiguriert ist, ein Tiefenbild sichtbaren Lichts gemäß dem Bayer-Teilbild und dem ersten Bild zu erfassen.

5. Kamerakomponente nach Anspruch 1, wobei der Prozessor (40) ferner dazu konfiguriert ist, ein Tiefenbild sichtbaren Lichts und Tiefendaten des Infrarot-Teilbildes zu verschmelzen, um ein verschmolzenes Tiefenbild zu erhalten, wenn eine Infrarotlichtquelle eine strukturierte Lichtquelle oder eine Lichtquelle mit Laufzeitmessung (TOF) umfasst.

6. Kamerakomponente nach Anspruch 1, wobei der Prozessor (40) ferner dazu konfiguriert ist, als Reaktion auf eine Zoom-Operation eines Nutzers: ein Zoomen des Bildes auf der Grundlage des ersten Bildes und des Bayer-Teilbildes durchzuführen.

7. Verfahren zur Bildverarbeitung, wobei das Verfahren umfasst:

Erfassen (41) eines ersten Bildes, das von einem ersten Kameramodul erzeugt wird, und eines zweiten Bildes, das von einem zweiten Kameramodul erzeugt wird, wobei das erste Kameramodul Licht erster Bande erfasst, das zweite Kameramodul Licht erster Bande und Licht zweiter Bande erfasst, das zweite Bild ein Bayer-Teilbild, das vom zweiten Kameramodul durch Erfassen des Lichts erster Bande erzeugt wird, und ein Infrarot-Teilbild, das durch Erfassen des Lichts zweiter Bande erzeugt wird, umfasst; und

Durchführen (42) einer Bildverarbeitung an zumindest einem von dem Bayer-Teilbild oder dem Infrarot-Teilbild und dem ersten Bild;

**dadurch gekennzeichnet, dass**

das Durchführen der Bildverarbeitung an dem Infrarot-Teilbild und dem ersten Bild ein Verschmelzen des Infrarot-Teilbildes und des ersten Bildes umfasst, um das erste Bild zu verbessern, wobei das Verschmelzen ein Extrahieren von Hochfrequenzinformationen des Infrarot-Teilbildes und ein Hinzufügen der extrahierten Hochfrequenzinformationen in eine Frequenzdomäne des ersten Bildes umfasst.

8. Verfahren zur Bildverarbeitung nach Anspruch 7, wobei das Durchführen der Bildverarbeitung an zumindest einem von dem Bayer-Teilbild oder dem Infrarot-Teilbild und dem ersten Bild umfasst: Erfassen eines Tiefenbildes sichtbaren Lichts gemäß dem Bayer-Teilbild und dem ersten Bild.

9. Verfahren zur Bildverarbeitung nach Anspruch 8, wobei, wenn eine Infrarotlichtquelle eine strukturierte Lichtquelle oder eine Lichtquelle mit Laufzeitmessung (TOF) umfasst, das Durchführen der Bildverarbeitung an zumindest einem von dem Bayer-Teilbild oder dem Infrarot-Teilbild und dem ersten Bild umfasst: Verschmelzen eines Tiefenbildes sichtbaren Lichts und von Tiefendaten des Infrarot-Teilbilds, um ein verschmolzenes Tiefenbild zu erhalten.

10. Verfahren zur Bildverarbeitung nach Anspruch 7, ferner umfassend: Durchführen eines Bildzoomens auf der Grundlage des ersten Bildes und des Bayer-Teilbildes als Reaktion auf eine Zoom-Operation eines Nutzers.

11. Computerlesbares Speichermedium mit Anweisungen, um die Kamerakomponente nach Anspruch 1 zu veranlassen, die Schritte des Verfahrens nach einem der Ansprüche 7 bis 10 auszuführen.

**Revendications**

1. Composant de caméra, dans lequel

le composant de caméra comprend un premier module de caméra (10) détectant la lumière d'une première bande, un deuxième module de caméra (20) détectant la lumière de première bande et la lumière d'une deuxième bande, une source de lumière infrarouge (30) émettant la lumière de deuxième bande, et un processeur (40) ; dans lequel le processeur (40) est couplé au premier module de caméra (10), au deuxième module de caméra (20) et à la source de lumière infrarouge (30), respectivement ;

le premier module de caméra (10) est configuré pour générer une première image sous la commande du processeur (40) ;

la source de lumière infrarouge (30) est configurée pour émettre la lumière de deuxième bande sous la commande du processeur (40) ;

le deuxième module de caméra (20) est configuré pour générer une deuxième image sous la commande du processeur (40), la deuxième image comprenant une sous-image bayer générée par la détection de la lumière de première bande et une sous-image infrarouge générée par la détection de la lumière de deuxième bande ; et

le processeur (40) est en outre configuré pour effectuer un traitement d'image sur au moins l'une de la sous-image bayer ou la sous-image infrarouge et la première image ;

**caractérisé par le fait que**

le processeur est configuré pour effectuer le traitement d'image sur la sous-image infrarouge et la première image en fusionnant l'image infrarouge et la première image pour améliorer la première image, dans lequel le processeur est configuré ; pour extraire des informations haute fréquence de la sous-image infrarouge et ajouter les informations haute fréquence extraites dans un domaine de fréquence de la première image.

2. Le composant de caméra selon la revendication 1, dans lequel la source de lumière infrarouge (30) comprend au moins l'un des éléments suivants : un projecteur infrarouge, une source de lumière structurée ou une source de lumière à temps de vol (TOF) ;

dans lequel le projecteur infrarouge est configuré pour augmenter la luminosité d'éclairage infrarouge d'un objet dans une plage de cadrage.

3. Le composant de caméra de la revendication 1, dans lequel les champs de vision des lentilles de caméra dans le premier module de caméra (10) et le deuxième module de caméra (20) sont différents.

4. Le composant de caméra de la revendication 1, dans lequel le processeur (40) est en outre configuré pour acquérir une image de profondeur en lumière visible en fonction de la sous-image bayer et de la première image.

5. Le composant de caméra de la revendication 1, dans lequel, lorsqu'une source de lumière infrarouge comprend une source de lumière structurée ou une source de lumière à temps de vol (TOF), le processeur (40) est en outre configuré pour fusionner une image de profondeur en lumière visible et des données de profondeur de la sous-image infrarouge pour obtenir une image fusionnée en profondeur.

6. Le composant de caméra de la revendication 1, dans lequel le processeur (40) est en outre configuré, en réponse à une opération de zoom d'un utilisateur, pour : effectuer un zoom d'image sur la base de la première image et de la sous-image bayer.

7. Procédé de traitement d'image, dans lequel le procédé comprend :

acquérir (41) une première image générée par un premier module de caméra et une deuxième image générée par un deuxième module de caméra, le premier module de caméra détectant la lumière d'une première bande, le deuxième module de caméra détectant la lumière de première bande et la lumière d'une deuxième bande, la deuxième image comprenant une sous-image bayer générée par le deuxième module de caméra en détectant la lumière de première bande et une sous-image infrarouge générée en détectant la lumière de deuxième bande ; et

effectuer (42) un traitement d'image sur au moins l'une de la sous-image bayer ou la sous-image infrarouge et la première image ;

**caractérisé par**

effectuer le traitement d'image sur la sous-image infrarouge et la première image comprend fusionner la sous-image infrarouge et la première image pour améliorer la première image, dans lequel fusionner comprend extraire des informations à haute fréquence de la sous-image infrarouge et ajouter les informations à haute fréquence extraites dans un domaine de fréquence de la première image.

8. Le procédé de traitement d'image selon la revendication 7, dans lequel effectuer le traitement d'image sur au moins l'une de la sous-image bayer ou la sous-image infrarouge et la première image comprend :

acquérir une image de profondeur en lumière visible en fonction de la sous-image bayer et de la première image.

9. Le procédé de traitement d'image selon la revendication 8, dans lequel, lorsque la source de lumière infrarouge comprend une source de lumière structurée ou une source de lumière à temps de vol (TOF), effectuer le traitement d'image sur au moins l'une de la sous-image bayer ou la sous-image infrarouge et la première image comprend :

fusionner une image de profondeur en lumière visible et les données de profondeur de la sous-image infrarouge pour obtenir une image fusionnée en profondeur.

10. Le procédé de traitement d'image selon la revendication 7, comprenant en outre :
effectuer, en réponse à une opération de zoom d'un utilisateur, un zoom d'image en fonction de la première image et de la sous-image bayer.

11. Médium de stockage lisible par ordinateur comprenant des instructions pour amener le composant caméra selon la revendication 1 à exécuter les étapes du procédé de l'une quelconque des revendications 7 à 10.

**FIG. 1**

**FIG. 2**

**FIG. 3**

A first image generated by a first camera module and a second image generated by a second camera module are acquired, and the second image includes a bayer subimage generated by the second camera module by sensing first-band light and an infrared subimage generated by sensing second-band light

41

Image processing is performed on at least one of the bayer subimage or the infrared subimage and the first image

42

**FIG. 4**

Image processing device

Image acquisition module 51

Image processing module 52

**FIG. 5**

**FIG. 6**

**EP 3 941 042 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017264884 A1
- US 2010328475 A1
- US 2019228512 A1